# EUROPÄISCHE PATENTSCHRIFT

(11) **EP 0 399 101 B1**
(45) Veröffentlichungstag und Bekanntmachung des Hinweises auf die Patenterteilung: **23.08.1995**
(21) Anmeldenummer: 89119963.0
(22) Anmeldetag: 27.10.1989
(51) Int. Cl.: G01N 27/30, G01N 27/36, G01N 33/12

(54) **Verfahren zur Erzeugung eines konstanten Ableitpotentials und zur pH-Wert Messung und pH-Messkette in der analytischen Chemie**
Method of producing a constant reference potential and of measuring the pH-value and pH-meter for analytical chemistry
Procédé pour produire un potentiel de reference constant et pour mesurer la valeur pH et instrument de mesure pour la valeur pH pour la chimie analytique

(30) Priorität: 20.05.1989 DE 8906234 U
(43) Veröffentlichungstag der Anmeldung: 28.11.1990
(73) Patentinhaber: Neukum, Alfred, D-75334 Straubenhardt (DE)
(72) Erfinder: Neukum, Alfred, D-7541 Straubenhardt 1 - Feldr. (DE)
(74) Vertreter: Trappenberg, Hans

(56) Entgegenhaltungen:
- AT-B- 325 579
- DE-B- 2 544 360
- DE-U- 8 709 937
- DE-U- 8 715 221
- DE-U- 8 805 706
- DE-U- 8 906 234
- GB-A- 2 107 473
- GB-A- 2 177 214
- LABORATORY PRACTICE vol. 24, no. 4, April 1975, London, GB Seite 248 K. GARBETT ET AL: "Capillary tip reference electrode based on a glass syringe"

## Beschreibung

### Stand der Technik

Zur Durchführung der Messung des pH-Werts auf potentiometrischem Wege sind eine Vielzahl von unterschiedlichen Meßanordnungen bekannt, wobei stets eine Glaselektrode, eine Bezugselektrode und ein die Ableitpotentiale beider Elektroden verarbeitender und den gemessenen pH-Wert beispielsweise anzeigender Meßumformer vorhanden sind.

Die meisten pH-Meßeinrichtungen stellen eine Kombination von Glaselektroden und Bezugselektroden dar und bilden somit eine Elektroden-Meßkette, die dann eine im überwiegenden Maße industriell eingesetzte pH-Einstabmeßkette darstellt, wenn die beiden Elektrodenausführungen in einer Bauform vereinigt sind. Die Bestimmung des pH-Wertes beruht auf der Messung von Ionenkonzentrationen und ist allgemein hinreichend bekannt, so daß hierauf nicht weiter eingegangen zu werden braucht; damit die H⁺-Ionenkonzentration mittels der Glasmembran der Meßelektrode erfaßt und in eine aussagefähige pH-Wertangabe umgesetzt werden kann, ist die Bezugselektrode erforderlich, die ein konstantes Vergleichs- oder Ableitpotential zur Meßelektrode herstellt, wobei die Trennung an der Kontaktstelle zwischen dem Innenelektrolyten der Bezugselektrode und der Meßlösung über eine Kapillarverbindung, nämlich das sogenannte Diaphragma erfolgt.

Diese konstruktive Anordnung (also Glasmembran der Meßelektrode und Diaphragma der Bezugselektrode) erfordert es, daß sich während der Messung sowohl die Glasmembran als auch das Diaphragma innerhalb des Meßmediums befinden; für das Diaphragma ist mindestens eine äußere Kontaktauflage erforderlich.

Probleme ergeben sich speziell im Bereich der Bezugselektrode bei speziellen Einsatzfällen dann, wenn Messungen beispielsweise im fleischverarbeitenden Gewerbe oder in halbfesten Stoffen wie Käse, Pasten u. dgl. durchgeführt werden müssen. Auch in solchen Anwendungsfällen ist es zwar möglich, die Meßkette in das Meßmedium einzuschieben und nach Durchführung der Messung wieder herauszuziehen, wobei man, falls sich Verschmutzungen an der Glasmembran der Meßelektrode ergeben haben, eine entsprechende Säuberung vornehmen kann. An der Bezugselektrode ergibt sich jedoch durch das Einschieben und Herausziehen zwangsläufig eine Verschmutzung oder Blockierung des Diaphragmas, wodurch es ebenso zwangsläufig zu Verfälschungen der Meßergebnisse kommt, eventuell auch zur allmählichen Vergiftung des Innenelektrolyten.

Es ist daher auch schon bekannt (DE-GM 87 09 937.3), eine pH-Meßkette zur Messung an solchen halbfesten Stoffen mit einem Bezugssystem zu versehen, welches innerhalb eines Elektrolyt-Gefäßes mit festen Abmessungen einen gelartigen Bezugselektrolyten in Form eines geeigneten Polymers verwendet. Um eine langzeitliche Nullpunktstabilität des Bezugssystems zu erreichen, ist in das Polymer Kaliumchlorid in kristalliner Form eingebracht. Wesentlich ist ferner, daß die untere Grenzfläche des den Bezugselektrolyten bildenden Polymers gleichzeitig als Meßdiaphragma wirkt, das Elektrolytgefäß also an dieser Stelle nicht geschlossen ist. Beim Meßvorgang wird dann zwar die pH-Elektrode mit ihrer Glasmembran in den zu messenden Stoff eingebracht; die untere freie Fläche des gelartigen Bezugselektrolyten wird jedoch nur auf die Oberfläche des Meßmediums aufgesetzt. Durch die physikalischen Eigenschaften des Polymers ergibt sich eine Selbstreinigung, wobei es möglich ist, durch geeignete Materialwahl und die Konstruktion des Elektrolytgefäßes die jeweils abgenutzte Diaphragma-Grenzfläche auch einfach abzuschneiden. Bezugssystem und die pH-Elektrode lassen sich bei Bedarf einzeln von einem Handgriff trennen, mit dem die Bedienungsperson die so gebildete pH-Meßkette handhabt.

Bei dieser bekannten pH-Meßkette bleibt dennoch problematisch, daß das Meßdiaphragma im Verlauf der durchzuführenden Messung allmählich eine Veränderung erleiden kann, bis durch den radikalen Schritt des Abschneidens eines unteren Teils vom Bezugselektrolyten das Diaphragma wieder vollständig erneuert wird.

Aus einem Artikel von K. Garbett et al. ("Capillary tip reference electrode based on a glass syringe" in LABORATORY PRACTICE, vol.24, no.4, April 1975, London GB, S.248) ist eine Bezugselektrode zur Messung des Korrosionspotentials von Metalloberflächen oder für medizinische oder biologische Studien bekannt, die aus einer Spritze in Form eines Kolben/Zylinderaggregats aufgebaut ist. Dabei enthält der gefäßartige, am unteren Ende mit einer Öffnung versehene Kolben einen gelierten Elektrolyten und darin ein Silber/Silberchlorid Ableitelement. Der Zylinder, in dem der Kolben gleitverschieblich aufgenommen ist, ist mit einem Salzbrückenelektrolyten gefüllt und am unteren Ende mit einer Kapillare versehen. Durch Eindrücken des Kolbens kann Salzbrückenelektrolyt aus der Kapillare gedrückt und diese so vor Verschmutzung geschützt werden.

Die AT-B-325 579 offenbart u.a. im Hinblick auf pH-Messungen eine Bezugselektrode bestehend aus einem Elektrolytgefäß in Form eines Zylinders, an dessen Ende eine Diaphragma angebracht ist und in dem ein gegen die Elektrolytgefäßwand durch eine Feder vorbelasteter, im Elektrolytgefäß gleitverschieblicher Kolben angeordnet ist, dessen Überdruck gegenüber der Meßlösung für einen kontinuierlichen Ausstrom von Innenelektrolyt über das Diaphragma sorgt.

Der Erfindung liegt die Aufgabe zugrunde, eine Bezugselektrode speziell für Messungen an halbfesten Stoffen zu schaffen, die in Verbindung mit einer pH-Meßelektrode nullpunktstabilisiert und selbstreinigend ausgebildet ist.

### Vorteile der Erfindung

Die Erfindung löst diese Aufgabe mit den Merkmalen des Anspruchs 1 bzw. des Anspruchs 2 und hat den Vorteil, daß durch die Ausnutzung der Bewegungsenergie, die beim Einbringen der pH-Meßelektrode in das Meßmedium erforderlich ist, gleichzeitig eine, und dies ist von besonderer Bedeutung für die vorliegende Erfindung, vorübergehende Druckerhöhung im Bereich des Innenelektrolyten der Bezugselektrode erfolgt, die letztendlich dazu führt, daß die Elektrolytflüssigkeit über das Diaphragma versucht, aus dem Elektrolytraum zu entweichen. Diese Wirkung hält bewußt nur kurzfristig an, da beim Herausziehen der pH-Meßelektrode aus dem Meßmedium, beispielsweise halbfester Stoff, aber auch Fleisch o.dgl. der Überdruck wieder abgebaut wird, so daß der Verlust an Innenelektrolyt denkbar gering ist.

Dennoch gelingt es durch die Erfindung, das Diaphragma, welches beispielsweise aus einem Keramikstift oder aus einem sonstigen porösen Werkstoff bestehen kann, von Verunreinigungen vollkommen freizuhalten, wobei lediglich an der Grenzfläche zwischen Diaphragma und Meßmedium eine Vermischung von Elektrolytflüssigkeit mit dem zu messenden Stoff erfolgen könnte; Diffusionsspannungsfehler werden hierdurch auf ein gleichbleibendes Minimum reduziert, da die Strömungsgeschwindigkeit und die Konzentration der Elektrolytflüssigkeit innerhalb des Diaphragmas praktisch konstant bleiben.

Das Bezugssystem bei vorliegender Erfindung ist daher sowohl nullpunktstabilisiert als auch selbstreinigend ausgebildet, wobei eventuell in das Diaphragma eintretende Schmutzpartikel oder sonstige Fremdstoffe, die unter Umständen zu Vergiftungen des Inhalts und Verlust führen könnten, durch die ausfließende Elektrolytflüssigkeit jeweils bei jeder Messung wieder abgestoßen werden.

Besonders vorteilhaft ist die Ausbildung der Bezugselektrode nach Art eines Kolben/Zylinderaggregates, wobei nicht der in diesem Fall feststehende Kolben bewegt wird, sondern der an seinem vorderen Ende das Diaphragma tragende Zylinder, der beim Einbringen in das Meßmedium auf den Kolben zurückgedrückt wird, so daß es zu der Druckerhöhung im Inneren des Elektrolyten des Bezugssystems kommt.

Eine vorteilhafte Ausgestaltung im Bereich des Bezugssystems besteht darin, daß dieses ferner zur Einstichtiefenverstellung mit entsprechender Rücksichtnahme auf die vorgegebenen Längenabmessungen der pH-Elektrode selbst im gemeinsamen Handgriff oder Gehäuse zusätzlich zu der Relativverschiebung zwischen Kolben und Zylinder tiefenverstellbar angeordnet ist, so daß es möglich ist, auch tiefere Schichten des Meßmediums mit der Meßelektrode noch zu erreichen, ohne daß die Bezugselektrode, beispielsweise bis auf deren vorspringend ausgebildeten Diaphragmabereich, in das Meßmedium eindringen muß. Diese Einstichtiefenverstellung kann, falls gewünscht, auch sehr feinstufig ausgelegt sein.

Vorteilhaft ist ferner, daß im Bereich der pH-Elektrode, die je nach Wunsch auch sehr tief in das Meßmedium eindringen muß, zusätzliche, die pH-Elektrode mehrfach, vorzugsweise im gleichmäßig peripheren Abstand umgebende Einsteck-Schutzspitzen zusätzlich vorgesehen sind, die dafür sorgen, daß die notwendigerweise die vordere Spitze der Meßelektrode bildende pH-Glaselektrode mit ihrem Membranbereich nicht unnötig mechanisch belastet wird. Dabei ist die Meßelektrode zusammen mit ihrem metallischen Elektrodenrohr, den angrenzenden Einsteck-Schutzspitzen und der vorderen pH-Glaselektrode wie auch die Referenzelektrode vom sie lagernden Gehäuse mit Handgriff abnehmbar ausgebildet, so daß ein Austausch bei Störungen oder Beschädigungen einer oder beider Elektroden kostengünstig vorgenommen werden kann.

Vorteilhaft ist ferner, daß es trotz der manuellen Verstellbarkeit des Bezugselektroden-Anschlags möglich ist, die elektrische Verbindung ohne Bruchgefahr für ein insofern ständig bewegtes Kabel herzustellen, indem eine Vorspannungsfeder, die am hinteren Ende des Lagerrohrs oder Schieberohrs für die Bezugselektrode angreift, die Übertragung des konstanten, von dieser Elektrode gelieferten Vergleichspotentials mit übernimmt.

### Zeichnung

Ausführungsbeispiele der Erfindung sind in der Zeichnung dargestellt und werden in der nachfolgenden Beschreibung näher erläutert. Es zeigen:
- Fig. 1: eine erste Ausführungsform einer pH-Meßkette mit stielartigem Griff, in welchem Bezugselektrode und Meßelektrode festsitzend angeordnet sind, wobei der Griff für die Bezugselektrode die Lagerung für den verschieblichen Zylinder im Bezugselektrodenbereich übernimmt, während die
- Fig. 2: ebenfalls im Querschnitt wie die Fig. 1 ein weiteres Ausführungsbeispiel einer pH-Meßkette mit pistolengriffartig ausgebildetem Gehäuse und an diesem lösbar angeordneter Bezugs- und Meßelektrode;
- Fig. 3: zeigt in einer Teildarstellung die Meßelektrode im Schnitt und die Art ihrer Befestigung am Gehäuse des Pistolenhandgriffs, während die
- Fig. 4: die Ausführungsform der Fig. 3 in einer Ansicht von vorn mit abgenommenen Elektroden darstellt, mit der Schiebelagerung für die Bezugselektrode im Schnitt.

### Beschreibung der Ausführungsbeispiele

Der Grundgedanke vorliegender Erfindung besteht darin, auf den Innenelektrolyten der Bezugselektrode immer dann und nur dann einen dessen Fließbewegung zum und gegebenenfalls durch das Diaphragma unterstützenden oder bewirkenden und insofern zeitlich begrenzten Druck auszuüben, wenn bei der Benutzung der pH-Meßkette insgesamt die pH-Meßelektrode in das Meßmedium eingebracht wird, bei gleichzeitiger, überwiegend äußerer Anlage des mit dem Diaphragma bestückten Bereichs der Bezugselektrode.

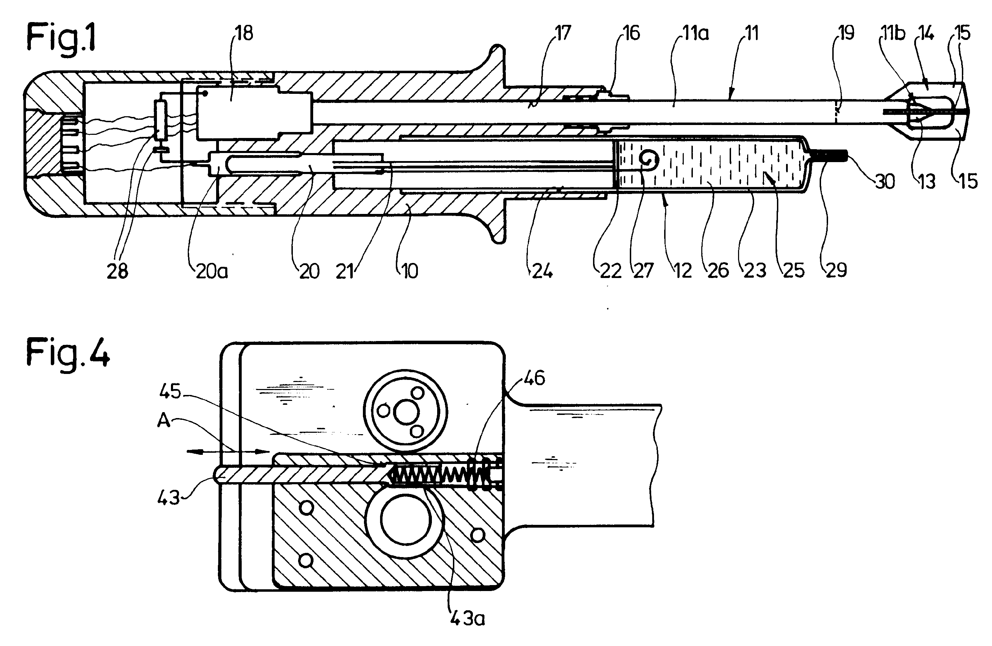

Die in Fig. 1 dargestellte einfachere Ausführungsform einer pH-Meßkette mit nullpunktstabilisierter, selbstreinigender Bezugselektrode umfaßt ein als Handgriff ausgebildetes Gehäuse 10, welches nach vorn, also in der Zeichenebene der Fig. 1 nach rechts gesehen die pH-Meßelektrode 11 sowie die Bezugselektrode 12 aufnimmt und lagert. Bei dieser Ausführungsform sind Meßelektrode und Bezugselektrode mit dem Gehäuse des Handgriffs 10 fest verbunden, wobei die Meßelektrode 11 ein vorzugsweise metallisches Schutzrohr 11a umfaßt, welches in seinem hohlen Inneren den Einsatz der pH-Glaselektrode 11b lagert, die mindestens mit ihrem Membranbereich 13 aus dem Schutzrohr 11a hinausragt.

Dabei kann der vordere Bereich des Schutzrohrs 11a, wie in Fig. 1 gezeigt, in Form einer Lanzette 14 ausgebildet sein, indem beispielsweise drei im gleichmäßig peripheren Abstand um den Einsatz der pH-Glaselektrode 11b herum und diese zwischen sich aufnehmend vom vorderen Bereich des metallischen Schutzrohrs 11a ausgehende Flügel 15 vorgesehen sind, die sich nach vorn wieder vereinigen und so den Glaseinsatz mit dem Membranbereich 13 wirksam gegen Beschädigung schützen. Die Flügel 15 können einstückig am metallischen Schutzrohr 11a angeordnet, beispielsweise mit diesem verschweißt sein, und es können auch mehr als drei Flügel vorgesehen sein.

Das metallische Schutzrohr 11a der Meßelektrode 11 ist mittels einer geeigneten Verschraubung 16 in der zugeordneten Einsatzbohrung 17 des Gehäuses 10 gehalten; weiter nach hinten kann noch eine Kontaktbuchse 18 vorgesehen sein, in welche das Schutzrohr 11a mit der in seinem Inneren angeordneten Ableitelektrode einmündet. Es versteht sich, daß der Einsatz der Glaselektrode nicht notwendigerweise über die gesamte Länge des Schutzrohrs geführt zu sein braucht; beispielsweise kann sich dieser Einsatz bis zu der bei 19 angedeuteten gestrichelten Linie erstrecken, so daß dann im Schutzrohr lediglich gegenüber diesem isoliert die Ableitelektrode als feiner Draht bis zum Kontaktbereich nach hinten in das Gehäuse verläuft.

Die Bezugselektrode 12 umfaßt ein in geeigneter Weise ausgebildetes Kolben/Zylinderaggregat, wobei die Aufnahme und Lagerung im Gehäuse 10 so getroffen ist, daß sich eine Relativverschiebung der beiden Teile Kolben/Zylinder jeweils dann ergibt, wenn das Gerät benutzt wird - hierauf wird weiter unten noch eingegangen.

Die spezielle Ausführungsform ist so getroffen, daß ein fest mit dem Gehäuse in einer Innenbohrung desselben sitzendes Kolbenlagerelement 20 vorgesehen ist, welches eine Kolbenstange 21 in geeigneter Weise aufnimmt und fixiert, die an ihrem unteren, also vorderen Ende einen Kolben 22 trägt. Kolben 22 und Kolbenstange 21 sind aus elektrisch nicht leitendem Material, wobei der Kolben 22 allseitig bündig in einem als Zylinder ausgebildeten Elektrolytgefäß 23 gleitverschieblich angeordnet ist, wobei dieses Elektrolytgefäß 23 seinerseits gleitverschieblich in einer Bohrung 24 im Gehäuse 10 aufgenommen ist.

In dem vom Kolben 22 und den innneren Zylinderwänden des Elektrolytgefäßes 23 begrenzten Raum 25 befindet sich die Elektrolytflüssigkeit für die Bezugselektrode, also deren Innenelektrolyt (üblicherweise KCl), der in Fig. 1 mit 26 bezeichnet ist. In den Innenelektrolyten taucht die Ableitelektrode, also der Elektrodeneinsatz 26 der Bezugselektrode ein, der üblicherweise als Silber-Silberchlorid-Ableitung ausgebildet ist. Der Elektrodeneinsatz 27 ist dabei vorzugsweise längs der Kolbenstange 21 geführt und kann an dieser befestigt sein, wobei er den Kolben 22 durchsetzt und sich daher mit seinem unteren Endteil innerhalb des Elektrolytraums befindet. Die weiterführende elektrische Verbindung erfolgt dann über die im Gehäuse 10 sitzende Kolbenhalterung 20, die auch in Form eines Kontaktsteckers ausgebildet sein kann.

Vorzugsweise enthält die Kontaktbuchse 18 für die pH-Meßelektrode gleichzeitig einen integrierten elektrischen Vorverstärker, der das elektrische Meßsignal von der pH-Glaselektrode 11b entsprechend impedanzwandelt und verstärkt. Dabei kann zur Ableitung elektrischer Störsignale und zur Abschirmung der pH-Meßelektrode 11 deren Schutzrohr 11a durch Entkopplungselemente, bestehend aus einem Kondensator mit in Reihe geschaltetem Widerstand 28 mit der Bezugselektrode elektrisch gekoppelt sein.

Der Aufbau der Bezugselektrode 12 vervollständigt sich durch einen verjüngten, rohrförmig vorspringenden Längsvorsprung 29 am vorderen Ende des zylindrischen Elektrolytgefäßes 23, der das Diaphragma bildet, so daß sich in seinem Inneren ein entsprechendes Diaphragmamaterial, beispielsweise Keramikmaterial, Fasermaterial o. dgl. befindet, das das Diaphragma 30 bildet.

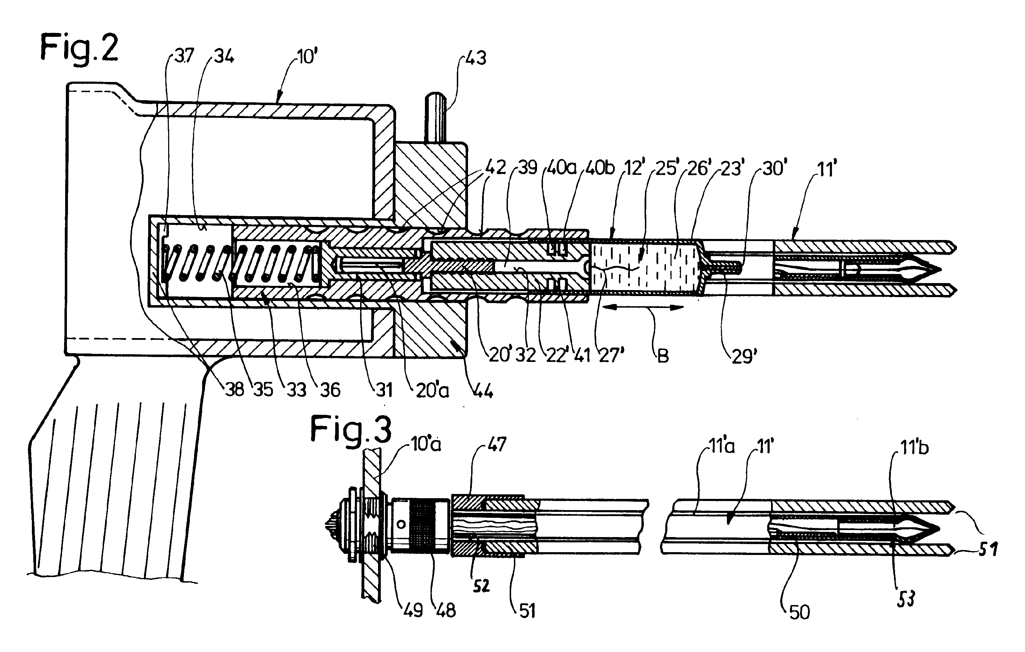

Es ergibt sich dann folgende Funktion der pH-Meßkette, die sich sowohl für pH-Messungen in flüssigen als auch in halbfesten Stoffen, speziell im fleischverarbeitenden Gewerbe, eignet, wobei diese Funktionsbeschreibung insofern auch für das zweite modifizierte, in den Figuren 2 bis 4 dargestellte Ausführungsbeispiel einer pH-Meßkette sinngemäß gilt.

Durch Halten am Handgriff des Gehäuses 10 wird die pH-Meßelektrode 11 in den (halbfesten) zu messenden Stoff eingestochen, gegebenenfalls aber auch nur unter Druck angelegt, wenn z.B. mit einer Flächenmembran Hautwerte gemessen werden, bis das vordere Ende des Diaphragmas 30 auf der Oberfläche des Meßmediums aufliegt. Durch die manuelle Kraft, die beim Einstechen der pH-Meßkette, genauer gesagt der pH-Meßelektrode über den Handgriff auch auf die Bezugselektrode 12 bzw. auf dessen Diaphragma 30 beim Auftreffen auf das Meßmedium ausgeübt wird, ergibt sich eine auf den Zylinder des insofern beweglichen Elektrolytgefäßes einwirkende Kraft, die den Zylinder zurückzudrücken versucht, wobei es gleichzeitig zu einer sicheren Auflage und insofern dann auch Kontaktgabe im Diaphragmabereich der Bezugselektrode kommt.

Da die Kolbenstange 21 mit Kolben 22 im Handgriff festsitzt, bildet sich im Elektrolytraum 25 ein Überdruck, so daß die Elektrolytflüssigkeit 26 versucht, über das Diaphragma 30, welches, wie auch jedes andere Diaphragma von jedenfalls poröser Struktur ist, zu entweichen.

Dies bewirkt, daß sich ausschließlich an der vorderen Grenzfläche des Diaphragmas 30 zum Meßmedium eine Vermischung der Elektrolytflüssigkeit mit dem zu messenden Medium erfolgt, also nicht innerhalb des Diaphragmas und schon gar nicht im Bereich des Innenelektrolyten. Hierdurch ergibt sich die Selbstreinigungswirkung im Diaphragmabereich bei gleichzeitiger sicherer Nullpunktstabilisierung, da hierdurch Diffusionsspannungsfehler auf ein gleichbleibendes Minimum reduziert werden können und die Strömungsgeschwindigkeit und die Konzentration der Elektrolytflüssigkeit innerhalb des Diaphragmas während der Messung praktisch konstant bleiben. Auch werden in das Diaphragma evtl. eintretende Partikel beliebiger Herkunft, Schmutzpartikel oder auch Teile des Meßmediums durch die während des einwirkenden "Meßdrucks" ausfließende Elektrolytflüssigkeit abgestoßen.

Nach Beendigung des Meßvorgangs wird die pH-Meßkette aus dem zu messenden Stoff wieder herausgezogen, wodurch sich der im Elektrolytraum 25 vorherrschende Überdruck aufgrund einer entsprechenden, geringfügigen Ausgleichsbewegung des Elektrolytgefäßes wieder abbaut.

Der nach vorn um einen vorgegebenen Abstand ragende, das Diaphragma 30 tragende Längsvorsprung hat auch noch einen weiteren Vorteil, der darin besteht, daß man, sollte sich dies als notwendig erweisen, das Diaphragma 30 leicht selbst reinigen kann, beispielsweise durch Freikratzen oder man kürzt unter Umständen auch das Diaphragma durch Abschneiden oder Abfeilen etwas.

Da das zweite Ausführungsbeispiel der Figuren 2, 3 und 4 auf ähnlichen Grundvoraussetzungen basiert, tragen in der folgenden Erläuterung vergleichbare Komponenten auch das gleiche Bezugszeichen, mit dem Unterschied eines Beistrichs oben.

So kann man am besten der Darstellung der Fig. 2 entnehmen, daß das Elektrolytgefäß 23′ der Bezugselektrode 12′ mit der Zylinderstruktur des Elektrolytgefäßes der Fig. 1 vergleichbar ist und ebenfalls über einen vorderen Längsvorsprung 29′ mit von diesem aufgenommenen Diaphragma 30′ verfügt.

Der Kolben 22′ ist allerdings großvolumiger ausgebildet und von einem bananensteckerartigen Kolbenlagerelement 20′ gehalten, welches auf der zum Kolben abgewandten Seite mit einem Stecker-Längselement 20a′ in eine stationäre Kontaktbuchse 31 eingreift. Auf der anderen Seite ist das Kolbenlagerelement 20′ mit einem Vorsprung in eine Bohrung 32 im Kolben 22′ eingeführt.

Auch hier durchsetzt der Elektrodeneinsatz 27 den Kolben 22′ längs dessen Innenbohrung 32 und mündet in den Elektrolytraum 25′ ein.

Unterschiedlich zum Ausführungsbeispiel der Fig. 1 ist, daß das gesamte Bezugssystem selbst noch einmal tiefenverstellbar in der Aufnahmebohrung des hier pistolenartig ausgebildeten Gehäuses 10′ des Handgriffs sitzt. Hierzu ist ein seinerseits das Kolben/Zylinderaggregat 22′, 23′ aufnehmendes und lagerndes Schieberohr 33 vorgesehen, welches selbst kolbenartig von einer vom Gehäuse 10′ gebildeten Aufnahmebohrung 34 verschieblich aufgenommen ist. Hierdurch ist es nämlich möglich, eine Einstichtiefen-Verstellung für das Bezugssystem 12′ vorzusehen, was dann besonders sinnvoll ist, wenn man mit dem sensitiven Bereich der Meßelektrode unterschiedlich weit in das Meßmedium eindringen möchte, beispielsweise bei der Fleischüberprüfung verschiedene Gewebeschichten untersuchen möchte. Damit es auch in solchen Fällen stets zu einer lediglich äußeren Kontaktanlage des Bezugssystems kommt, läßt sich dieses zusätzlich zu der wie beim ersten Ausführungsbeispiel möglichen Relativverschiebung im Bereich des Elektrolytgefäßes zur Druckerhöhung des Innenelektrolyten insgesamt nochmals in der Tiefe verstellen, was bedeutet, daß das das Bezugssystem seinerseits nun an Stelle des Gehäuses lagernde Schieberohr in der Aufnahmebohrung 34 des Gehäuses in unterschiedlichen Positionen eingeschoben und dann sinnvollerweise auch arretiert werden kann.

Es ist zunächst eine Vorspannungsfeder 35 als Druckfeder vorgesehen, die in einer Ausnehmung 36 des Schieberohrs 33 gelagert ist und sich am hinteren Ende der Aufnahmebohrung 34 des Gehäuses 10′ abstützt, und zwar an einer dort vorgesehenen Kontaktplatte 37 für das Referenzsystem, was deshalb sinnvoll ist, weil diese Vorspannungsfeder 35 bis zur Stirnfläche der Kontaktbuchse 31 reicht und daher in der Lage ist, durch ihre beidseitige feste Anlage das Ableitpotential des Bezugssystems bis zur Kontaktplatte 37 zu übertragen, von welcher es dann in geeigneter Weise über einen Anschlußdraht 38 zu der weiterverarbeitenden elektrischen Schaltung innerhalb des Pistolenhandgriff-Gehäuses 10′ geführt ist.

Dabei kann der Silber-Silberchloriddraht 27 der Bezugselektrode innerhalb des Kolbens durch eine geeignete Epoxy-Abdichtung 39 zum gleichzeitig elektrisch leitenden Kolbenlagerelement 20′ geführt sein, wobei zur besseren Abdichtung des Kolbens 22′ dieser im vorderen Bereich zwei Ringnuten 40a, 40b aufweist, die wie bei einer ärztlichen Spritze ein dann insoweit auch axial nachgiebiges Dichtelement 41 einschließen, wodurch eine einwandfreie Abdichtung des Elektrolytraums nach außen erzielt werden kann.

Zur arretierbaren Fixierung des Bezugselektrodensystems können verschiedene Mittel vorgesehen sein, beispielsweise nach innen vorspringendes und manuell betätigbares Federelement, welches nasenartig in aufeinanderfolgende Einkerbungen im Schieberohr eingreift und daher das Schieberohr gegen den Druck der Vorspannungsfeder 35 arretiert; bevorzugt ist das Schieberohr 33 an seinem Außenumfang, wie in Fig. 2 gezeigt, mit wellenartigen, um die Zylinderform des Schieberohrs laufende Ringausnehmungen 42 versehen, die das Schieberohr abschnittsweise verjüngen.

In diese Ringkerbungen 42 des Schieberohrs greift von außen ein gehäusefester Stift 43 ein, der, was vorteilhaft sein kann, in einem eigenen, an den Pistolengriff des Gehäuses 10′ angesetztes Teilgehäuse 44 gelagert ist, wobei dieses Teilgehäuse mit der Frontseite des Gehäuses 10′ verschraubt sein kann und im übrigen durch eine in der Zeichenebene der Fig. 2 nach hinten gerichtete Ausstülpung das Rohr mit der Aufnahmebohrung 34 für das Schieberohr bildet.

Der Arretierstift 43 ist in seinem Teilgehäuse 44 entsprechend dem Doppelpfeil A der Fig. 4 nach oben und unten verschiebbar und verfügt über einen unteren, verdickten Teilbereich 43a, der über einen Absatz 45 in den nach außen ragenden, verjüngten Teil des Arretierstiftes 43 übergeht.

In der durch die Vorspannung einer Druckfeder 46 bewirkten oberen Anschlagposition greift der verdickte Teil 43a des Arretierstiftes 43 paßgenau in eine der Ringkerbungen 42 des Schieberohrs 33 ein und arretiert das Schieberohr somit axial in beiden Richtungen.

Drückt man von oben auf den Arretierstift 43, dann läuft der Arretierstift 43 gegen den Druck der Feder 46 so weit nach unten, daß sich angrenzend zu den Ringkerbungen 42 des Schieberohrs nur noch der verjüngte Teil des Arretierstiftes 43 befindet, wodurch es möglich ist, das Schieberohr am senkrecht zu diesem verlaufenden Arretierstift 43 vorbeizuziehen und in jede beliebige gewünschte Endposition längs der durch den Doppelpfeil B in Fig. 2 angegebenen Richtung zu verschieben und durch Loslassen des Arretierstiftes 43 wieder zu arretieren.

Man erkennt auf Grund dieses Mechanismus auch sofort, daß es problemlos möglich ist, das Bezugssystem vollständig vom Handgriff zu lösen, wodurch lediglich noch die Feder, gegebenenfalls auch an der Kontaktplatte 37 befestigt, im Gehäuse verbleibt, so daß auch ein Austausch des Bezugssystems auf diese Weise problemlos möglich ist.

In ähnlicher Weise läßt sich im übrigen bei dieser Ausführungsform der Erfindung auch die in Fig. 3 nochmals gesondert herausgezeichnete pH-Meßelektrode vom Gerät lösen, wobei diese gesonderte Darstellung sinnvoll ist, weil in der Ansicht der Fig. 2 die Meßelektrode durch das Bezugssystem teilweise verdeckt ist.

Die Grundform der Meßelektrode 11′ mit Schutzrohr 11a′ und vorderem Glaselektrodeneinsatz 11b′ kann so getroffen sein wie weiter vorn schon anhand der Fig.1 erläutert; unterschiedlich hierzu ist, daß das Schutzrohr 11a′ fest mit einem Elektrodenstecker 48 verbunden ist, der seinerseits aufgenommen ist von einer die Gehäusewandung 10a′ durchsetzenden und mit dieser verschraubten Elektrodenbuchse 49. Auf diese Weise ist es möglich, das Meßelektrodensystem 11′ an der Trennstelle Elektrodenstecker 48/Elektrodenbuchse 49 zu trennen, wobei die Steckverbindung in geeigneter Weise ausgebildete, beispielsweise peripher verteilte Schnappeinrichtungen aufweist, die den Stecker 48 sicher axial in der Aufnahmebuchse 49 halten, mit entsprechenden, falls gewünscht auch koaxial zueinander angeordneten Kontakten (Zapfen und Aufnahmestecker) zur Weiterleitung des Ableitungspotentials.

Eine weitere vorteilhafte Ausgestaltung bei dieser Ausführungsform besteht darin, daß innerhalb des Schutzrohres 11a′ der Meßelektrode 11′ noch ein Temperatursensor 50 angeordnet ist, so daß es möglich ist, der Impedanzwandler- und Recheneinheit innerhalb des Gehäuses des Pistolenhandgriffes auch noch ein Temperatursignal ohne größeren Aufwand zu vermitteln, welches in die Berechnung und gleich am Gehäuse erfolgende Anzeige des gemessenen pH-Werts einbezogen werden kann. Die Zuleitungen zum Temperatursensor 50, der beispielsweise ein Pt-1000-Element sein kann, erfolgen ebenfalls im Inneren des Schutzrohres 11a′.

Eine weitere Ausgestaltung besteht dann noch darin, daß anstelle der lanzettartigen Ausbildung und Einhüllung der Glaselektrode durch das Schutzrohr wie in Fig. 1 das gesamte pH-Elektroden-Schutzrohr mit vorderer Glaselektrode von auch die vordere Spitze der Glaselektrode, also deren Membranbereich überragenden Schutzspitzen 51 umgeben ist. Diese Schutzspitzen sind in einer Halterung 47 gelagert, die sich im Bereich des Elektrodensteckers 48 befindet; in geeigneter Weise ist die Halterung mit dem Schutzrohr 11a′ verbunden. Vorzugsweise sind drei solche Schutzspitzen 51 vorgesehen, die in gleichmäßigem Winkelabstand das Schutzrohr mit der von ihm aufgenommenen, beispielsweise eingekitteten Glaselektrode umgeben. Die Einsteckschutzspitzen 51 sitzen angrenzend zum Schutzrohr fest in der Halterung 47. Diese Halterung 47 ist wiederum, zusammen mit den Schutzspitzen, durch ein Gewinde 52, welches auf das Schutzrohr 11a′ aufgebracht ist, separat abnehmbar. Hierdurch ergeben sich die Vorteile einer leichteren Reinigung, die Möglichkeit, ohne Schutzspitzen mit nur einem Einstichloch, allerdings bei dann ungeschützter pH-Membran, zu arbeiten und bei Austausch der pH-Elektrode braucht die Halterung mit den Schutzspitzen nicht mit ausgetauscht zu werden.

Auf einen weiteren Umstand ist noch hinzuweisen. Die pH-Membran bzw. der vordere Spitzenbereich der pH-Glasmembran ist nach außen/rückwärts gerichtet gewölbt ausgeführt und bildet insofern einen glatten Übergang mit dem Schutzrohr, wie bei 53 in Fig. 3 gezeigt. Dies hat mehrere Vorteile zur Folge. Es ergibt sich beim Übergang kein Schmutzrand, ferner kann die Membran sich nach hinten abstützen; Einbettung und Abdichtung können somit elastisch erfolgen - unterschiedliche Ausdehnungskoeffizienten für Glas und Stahl(Schutzrohr) bleiben ohne Einfluß.

## Patentansprüche

1. Verfahren zur Erzeugung eines konstanten Ableitpotentials und zur pH-Wert Messung in der analytischen Chemie mittels einer Bezugselektrode, für eine im fleischverarbeitenden Gewerbe oder zur Messung in halbfesten Stoffen wie Käse, Pasten u. dgl. verwendeten pH-Meßkette, wobei die pH-Meßelektrode zur Durchführung der Messung durch einen Bewegungsablauf in das Neßmedium eingebracht wird, dadurch gekennzeichnet, daß die über ein Diaphragma (30) mit dem Meßmedium in Kontakt zu bringende Elektrolytlösung (26) der Bezugselektrode beim Einbringen der pH-Meßelektrode in das Meßmedium und gleichzeitigen Anpressen des Diaphragmas an das Meßmedium durch das gleitverschieblich in einer Bohrung (24) im als Handgriff ausgebildeten Gehäuse aufgenommene Elektrolytgefäß (23), welches auf einen relativ zum Gehäuse (10,10′) stationär gehaltenen, im Elektrolytgefäß gleitverschieblichen Kolben (22) wirkt, eine Kompression erfährt und durch den sich hierdurch im zeitlichen Ablauf ergebenden Druckansteig in der Elektrolytlösung eine Reinigung des in eine Außenkontaktanlage mit dem Meßmedium gelangenden Diaphragma (30) der Bezugselektrode erfolgt.

2. pH-Meßkette mit Bezugselektrode zur Erzeugung eines konstanten Ableitpotentials für das fleischverarbeitende Gewerbe oder zur Messung in halbfesten Stoffen wie Käse, Pasten u. dgl., wobei die pH-Meßelektrode zur Durchführung der Messung jeweils durch einen Bewegungsablauf in das Meßmedium eingebracht ist, und wobei das den Innenelektrolyten (26, 26′) des Bezugssystems (12, 12′) enthaltende Elektrolytgefäß (22, 23; 22′, 23′) kompressibel ist indem ein Kolben/Zylinderaggregat (22, 23; 22′, 23′) gebildet und von einem gleichzeitig als Handgriff für die Durchführung des Bewegungsablaufs zum Anlegen der Bezugselektrode dienenden Gehäuse (10, 10′) aufgenommen ist, wobei der Kolben (22, 22′) relativ zum Gehäuse stationär gehalten ist und das Elektrolytgefäß (23) gleitverschieblich in einer Bohrung (24) im Gehäuse (10) aufgenommen ist, so daß der das Elektrolytgefäß (25) im wesentlichen bildende und in seinem vorderen Bereich das Diaphragma (30) tragende Zylinder (23, 23′) des Bezugssystems beim Aufsetzen auf das Meßmedium unter gleichzeitiger Kompression des in ihm enthaltenen Innenelektrolyten auf den Kolben zurückgedrückt wird.

3. pH-Meßkette nach Anspruch 2, dadurch gekennzeichnet, daß der Kolben (22, 22′) im den Handgriff der pH-Meßkette bildenden Gehäuse (10, 10′) über eine Kolbenstange (21) oder unmittelbar stationär aufgenommen ist und die pH-Meßelektrode (11, 11′) ein elektrisch leitendes Schutzrohr (11a) umfaßt, welches an seinem vorderen Endbereich einen pH-Glaselektrodeneinsatz (11b, 11b′) aufnimmt, der mit der Glasmembran von umgebenden Schutzmitteln (14, 51) geschützt ist.

4. pH-Meßkette nach einem der Ansprüche 2,3, dadurch gekennzeichnet daß pH-Meßelektrode (11, 11′) einerseits und Bezugselektrode (12, 12′) andererseits, in einem einen Handgriff bildenden Gehäuse angeordnet sind.

5. pH-Meßkette nach einem der Ansprüche 2-4, dadurch gekennzeichnet, daß die Schutzmittel für die die pH-Meßkette vervollständigende pH-Meßelektrode (11) von einer mindestens zweischneidigen, den Glaselektrodeneinsatz (11b) umgebenden Lanzette (14) gebildet sind.

6. pH-Meßkette nach einem der Ansprüche 2-5, dadurch gekennzeichnet, daß das elektrisch leitende Schutzrohr (11a, 11a′) der pH-Meßelektrode (11, 11′) über einen mit einem Widerstand in Reihe geschalteten Koppelkondensator mit dem Potential der Bezugselektrode verbunden ist.

7. pH-Meßkette nach einem oder mehreren der Ansprüche 2-6, dadurch gekennzeichnet, daß ein seinerseits das Kolben/Zylinderaggregat (22′, 23′) mit Elektrolytgefäß (25) lagerndes Schieberohr (33) vorgesehen ist, welches im Gehäuse (10′) zur die angrenzende pH-Meßelektrode (11′) betreffenden Einstichtiefenverstellung in unterschiedlichen Tiefenpositionen verstellbar gelagert ist.

8. pH-Meßkette nach Anspruch 7, dadurch gekennzeichnet, daß das Schieberohr (33) in einer Aufnahmeausnehmung (34) des Gehäuses (10′) längsverschieblich arretierbar gelagert ist und selbst in einer Bohrung den das Elektrolytgefäß (25) für das Bezugssystem bildenden Zylinder (23′) gleitverschieblich lagert, wobei der vom Schieberohr über ein Kolbenlagerelement (20′) stationär gehaltene Kolben (22′) innerhalb des Zylinders (23′) gleitet.

9. pH-Meßkette nach Anspruch 8, dadurch gekennzeichnet, daß das Schieberohr an seinem Außenumfang Ringnuten oder -kerben (42) aufweist, in welche je nach gewünschter Tiefeneinstellung ein das Schieberohr axial nach beiden Richtungen sichernder Arretierstift (43) eingreift.

10. pH-Meßkette nach Anspruch 9, dadurch gekennzeichnet, daß der Arretierstift (43) in einem eigenen, an das als Pistolenhandgriff ausgebildete Gehäuse (10′) angesetzte Teilgehäuse (44) gelagert ist, welches durch eine nach innen gerichtete Ausstülpung die Aufnahmebohrung (34) für das Schieberohr (33) bildet und daß der Arretierstift (43) senkrecht gegen die Verstellrichtung des Schieberohrs (33) gegen den Druck einer Vorspannungsfeder (46) bewegbar ist.

11. pH-Meßkette nach Anspruch 10, dadurch gekennzeichnet, daß der Arretierstift (43) mit einem verdickten Teil im ausgefahrenen Ruhezustand in eine der Ringnuten (42) des Schieberohrs (33) eingreift und durch manuelles Niederdrücken aus der jeweils besetzten Ringnut (42) austritt und das Schieberohr (33) zur axialen Tiefeneinstellung des Bezugssystems freigibt.

12. pH-Meßkette nach einem der Ansprüche 2-11, dadurch gekennzeichnet, daß der drahtförmige Elektrodeneinsatz (27, 27′) den Kolben (22, 22′) durchsetzt und längs einer den Kolben lagernden Kolbenstange (21) bis zu einem rückwärtigen Kolbenlagerelement geführt ist, welches als Steckbuchseneinsatz in eine Kontaktbuchse (20a) eingesetzt ist, die stationär im als Längsgriff ausgebildeten Gehäuse (10) sitzt.

13. pH-Meßkette nach einem der Ansprüche 8-11, dadurch gekennzeichnet, daß die in den Innenelektrolyten eintauchende Silber-Silberchlorid-Ableitung (27′) einen Kanal im zylindrischen Längskolben durchsetzt, in welchem sie abgedichtet gelagert ist bis zum beidseitig steckerartig ausgebildeten Kolbenlagerelement (20′), an welchem sie elektrisch kontaktierend befestigt ist, und daß das Kolbenlagerelement mit einer vorderen Verlängerung den Kolben (22′) trägt und rückwärtig in eine Aufnahmebuchse (31) eingesetzt ist, die im Schieberohr (33) gelagert ist.

14. pH-Meßkette nach Anspruch 13, dadurch gekennzeichnet, daß die Aufnahmebuchse (31) in eine rückwärtige Ausnehmung (36) des Schieberohrs (33) mündet, in welcher eine Vorspannungsfeder angeordnet ist, die gleichzeitig die Aufnahmebuchse (31) elektrisch kontaktiert und mit ihrem abgewandten Ende an einer Kontaktplatte (37) der Aufnahmebohrung (34) des Gehäuses bzw. Teilgehäuses angreift, derart, daß die elektrische Kontaktverbindung über die Vorspannungsfeder läuft.

15. pH-Meßkette nach einem der Ansprüche 4-14, dadurch gekennzeichnet, daß die pH-Meßelektrode (11′) von mindestens zwei, vorzugsweise drei oder mehr Einsteckschutzspitzen (51) umgeben ist, die in einer gegenüber dem Schutzrohr (11a′) abnehmbaren, auf dieses vorzugsweise aufgeschraubten Halterung (47) sitzen und bis über die vordere Spitze des Gaselektrodeneinsatzes (11b′), dieses hierdurch umgebend und schützend, geführt sind.

16. pH-Meßkette nach Anspruch 15, dadurch gekennzeichnet, daß die Halterung (47) für die Einsteckschutzspitzen und der Elektrodenschaft 11a′ mit einem Elektrodenstecker verbunden sind, der lösbar/arretierbar, selbst verriegelbar in einer gehäusefesten Elektrodenbuchse (49) sitzt, derart, daß sich sowohl die pH-Meßelektrode (11′) als auch die Bezugselektrode (12′) zum Austausch, Reinigen und zur Wartung vom Gehäuse (10′) abnehmen lassen.

17. pH-Meßkette nach einem der Ansprüche 3-16, dadurch gekennzeichnet, daß innerhalb des metallischen Schutzrohrs (11a′) der Meßelektrode (11′) ein Temperatursensor (50) angeordnet ist, dessen Anschlußkontakte ebenfalls über die Elektrodenstecker/Elektrodenbuchsenpaarung (48, 49) zu weiterverarbeitenden Schaltungen innerhalb des Gehäuses geführt sind.

18. pH-Meßkette nach einem oder mehreren der Ansprüche 2-17, dadurch gekennzeichnet, daß das Diaphragma (30) von einer vorderen rohrförmigen Längserstreckung des das Elektrolytgefäß (25, 25′) bildenden Zylinders (23, 23′) aufgenommen ist und aus einem Keramikeinsatz oder einem sonstigen porösen Werkstoff besteht.

19. pH-Meßkette nach Anspruch 18, dadurch gekennzeichnet, daß die das Diaphragma (30, 30′) aufnehmende rohrförmige Verlängerung (29, 29′) ein einstückiger, verjüngter Teil des Zylinders (23, 23′) ist derart, daß durch Wegkratzen oder Kürzen der Rohrlänge des Längsvorsprungs (29, 29′) eine ergänzende Reinigung und Freisetzung des Diaphragmas (30, 30′) möglich ist.

20. pH-Meßkette nach einem der Ansprüche 2-19, dadurch gekennzeichnet, daß die Abdichtung des Kolbens (22′) an der inneren Zylinderwandung, längs welcher der Kolben gleitet, durch einen doppelten Ringeinschnitt (40a, 40b) im Kolben gebildet ist, die eine frei bewegliche abdichtende peripher vorstehende Ringzunge (41) einschließen.

21. pH-Meßkette nach einem der Ansprüche 2-20, dadurch gekennzeichnet, daß der pH-Glaselektrodeneinsatz (11b′) nach außen gewölbt ausgeführt ist, zur Vermeidung eines Schmutzrands und unter Bildung einer hinteren Membranabstützung.

## Claims

1. A method of producing a constant reference potential and measuring a pH-value in analytical chemistry by means of a reference electrode, for a pH-measuring system which is used in the meat-processing trade or for measurement in semi-solid substances such as cheeses, pastes and the like, wherein the pH-measuring electrode is introduced into the medium to be measured by a cycle of movements for carrying out the measurement operation, characterised in that the electrolyte solution (26) of the reference electrode, which solution is to be brought into contact with the medium to be measured by way of a diaphragm (30) experiences a compression effect when the pH-measuring electrode is introduced into the medium to be measured and at the same time the diaphragm is pressed against the medium to be measured, by the electrolyte vessel (23) which is slidably accommodated in a bore (24) in the housing formed as a handle and which acts as a piston (22) which is held stationarily relative to the housing (10, 10′) and which is slidable in the electrolyte vessel, and the rise in pressure in the electrolyte solution which occurs with the passage of time as a result provides for cleaning of the diaphragm (30) which comes into external contact relationship with the medium to be measured.

2. A pH-measuring system with reference electrode for producing a constant reference potential for the meat-processing trade or for measurement in semi-solid substances such as cheeses, pastes or the like, wherein for carrying out the measurement operation the pH-measuring electrode is respectively introduced into the medium to be measured by a cycle of movements and wherein the electrolyte vessel (22, 23; 22′, 23′) containing the internal electrolyte (26, 26′) of the reference system (12, 12′) is compressible by a piston/cylinder assembly (22, 23; 22′, 23′) being formed and being accommodated by a housing (10, 10′) which at the same time serves as a handle for carrying out the cycle of movements for applying the reference electrode, wherein the piston (22, 22′) is held stationarily relative to the housing, and the electrolyte vessel (23) is slidably accommodated in a bore (24) in the housing (10) so that the cylinder (23, 23′) of the reference system, which substantially forms the electrolyte vessel (25) and which in its front region carries the diaphragm (30), is pushed back on to the piston upon being applied to the medium to be measured with simultaneous compression of the internal electrolyte contained therein.

3. A pH-measuring system according to claim 2 characterised in that the piston (22, 22′) is stationarily accommodated by way of a piston rod (21) or directly in the housing (10, 10′) forming the handle of the pH-measuring system and the pH-measuring electrode (11, 11′) includes an electrically conducting protection tube (11a) which at its front end region accommodates a pH-glass electrode insert (11b, 11b′) which is protected with the glass membrane by surrounding protection means (14, 51).

4. A pH-measuring system according to one of claims 2 and 3 characterised in that the pH-measuring electrode (11, 11′) on the one hand and the reference electrode (12, 12′) on the other hand are arranged in a housing forming a handle.

5. A pH-measuring system according to one of claims 2 to 4 characterised in that the protection means for the pH-measuring electrode (11) which completes the pH-measuring system are formed by an at least double-edged lancet (14) which surrounds the glass electrode insert (11b).

6. A pH-measuring system according to one of claims 2 to 5 characterised in that the electrically conducting protection tube (lla, 11a′) of the pH-measuring electrode (11, 11′) is connected to the potential of the reference electrode by way of a coupling capacitor which is connected in series with a resistor.

7. A pH-measuring system according to one or more of claims 2 to 6 characterised in that there is provided a slide tube (33) which in turn mounts the piston-cylinder assembly (22′, 23′) with electrolyte vessel (25) and which is mounted displaceably in the housing (10′) for insertion depth adjustment in respect of the adjoining pH-measuring electrode (11′), in different positions in respect of depth.

8. A pH-measuring system according to claim 7 characterised in that the slide tube (33) is longitudinally displaceably arrestably mounted in a receiving opening (34) in the housing (10′) and itself slidably mounts in a bore the cylinder (23′) forming the electrolyte vessel (25) for the reference system, wherein the piston (22′) which is held stationarily by the slide tube by way of a piston mounting element (20′) slides within the cylinder (23′).

9. A pH-measuring system according to claim 8 characterised in that the slide-tube has at its outer periphery annular grooves or notches (42) into which engages, in accordance with the respective desired depth setting, an arresting pin (43) for securing the slide tube axially in both directions.

10. A pH-measuring system according to claim 9 characterised in that the arresting pin (43) is mounted in a housing portion (44) which is fitted to the housing (10′) that is in the form of a gun handle, the housing portion forming the receiving bore (34) for the slide tube (33) by virtue of an inwardly directed projection portion, and that the arresting pin (43) is movable perpendicularly relative to the direction of displacement of the slide tube (33) against the pressure of a biasing spring (46).

11. A pH-measuring system according to claim 10 characterised in that the arresting pin (43) engages into one of the annular grooves (42) in the slide tube (33) with a thickened part of the arresting pin in the extended rest condition and comes out of the respectively occupied annular groove (42) by manual depression and releases the slide tube (33) for axial depth adjustment of the reference system.

12. A pH-measuring system according to one of claims 2 to 11 characterised in that the electrode insert (27, 27′) in wire form passes through the piston (22, 22′) and is guided along a piston rod (21) which supports the piston to a rearward piston mounting element which is inserted in the form of a plug socket insert into a contact socket (20a) which is stationarily carried in the housing (10) which is in the form of a longitudinal handle.

13. A pH-measuring system according to one of claims 8 to 11 characterised in that the silver-silver chloride-discharge means (27′) which extends into the internal electrolyte passes through a passage in the cylindrical longitudinal piston in which it is mounted sealingly as far as the piston mounting element (20′) which is of a plug-like configuration at both sides and to which it is fixed in electrically contacting relationship and that the piston mounting element with a front extension portion carries the piston (22′) and rearwardly is fitted into a receiving sleeve (31) which is mounted in the slide tube (33).

14. A pH-measuring system according to claim 13 characterised in that the receiving sleeve (31) opens into a rearward opening (36) in the slide tube (33), in which opening is disposed a biasing spring which simultaneously electrically contacts the receiving sleeve (31) and with its remote end engages a contact plate (37) of the receiving bore (34) of the housing or housing portion, in such a way that the electrical contact connection goes by way of the biasing spring.

15. A pH-measuring system according to one of claims 4 to 14 characterised in that the pH-measuring electrode (11′) is surrounded by at least two and preferably three or more insertion protection tips (51) which are carried in a holder (47) that is removable relative to the protection tube (11a′) and that is preferably screwed on to same, the protection tips being extended beyond the-front tip of the gas electrode insert (11b′), thereby surrounding and protecting same.

16. A pH-measuring system according to claim 15 characterised in that the holder (47) for the insertion protection tips and the electrode shank (11a′) are connected to an electrode plug which is releasably/arrestably and self-lockably carried in an electrode socket (49) which is fixed with respect to the housing, in such a way that both the pH-measuring electrode (11′) and also the reference electrode (12′) can be removed from the housing (10′) for replacement, cleaning and maintenance.

17. A pH-measuring system according to one of claims 3 to 16 characterised in that disposed within the metal protection tube (11a′) of the measuring electrode (11′) is a temperature sensor (50) whose connecting contacts are also passed by way of the electrode plug/electrode socket pairing (48, 49) to circuits for effecting further processing within the housing.

18. A pH-measuring system according to one or more of claims 2 to 17 characterised in that the diaphragm (30) is accommodated by a front tubular longitudinal extension of the cylinder (23, 23′) forming the electrolyte vessel (25, 25′), and comprises a ceramic insert or another porous material.

19. A pH-measuring system according to claim 18 characterised in that the tubular extension (29, 29′) which accommodates the diaphragm (30, 30′) is an integral reduced part of the cylinder (23, 23′) in such a way that supplementary cleaning and exposure of the diaphragm (30, 30′) is possible by scratching away or reducing the length of the longitudinal projection (29, 29′).

20. A pH-measuring system according to one of claims 2 to 19 characterised in that the sealing action for the piston (22′) at the inner cylinder wall along which the piston slides is formed by a double annular recess (40a, 40b) in the piston which surround a freely movable sealing peripherally projecting annular tongue (41).

21. A pH-measuring system according to one of claims 2 to 20 characterised in that the pH-glass electrode insert (11b′) is of an outwardly curved configuration to avoid a dirt edge and forming a rearward membrane support means.

## Revendications

1. Procédé permettant, dans le domaine de la chimie analytique, l'établissement au moyen d'une électrode de référence d'un potentiel de travail constant ainsi que la mesure des valeurs de pH en vue d'obtenir une sonde de pH-mètre que l'on emploiera dans l'industrie de traitement et de transformation de la viande ou pour effectuer des mesures à l'intérieur de matières semi-solides telles que les fromages, les pâtes et autres matières semi-solides de ce type, procédé dans lequel on introduit en un mouvement rapide l'électrode de pH-mètre que l'on emploie pour effectuer la mesure à l'intérieur du milieu où cette mesure doit être effectuée, procédé caractérisé en ce que la solution d'électrolyte (26) de l'électrode de référence, solution que l'on doit amener par l'intermédiaire d'un diaphragme (30) au contact du milieu faisant l'objet de la mesure, est soumise à une compression lorsque l'on introduit l'électrode de pH-mètre à l'intérieur du milieu faisant l'objet de la mesure et alors que le diaphragme subit de façon simultanée une compression au contact du milieu faisant l'objet de la mesure, compression provoquée par le réservoir d'électrolyte (23) lorsqu'il s'enfonce, dans un mouvement de translation, par une ouverture (24) ménagée dans le carter qui a été dessiné en forme de poignée, lequel exerce une pression sur un piston (22) qui s'enfonce dans un mouvement de translation à l'intérieur du réservoir d'électrolyte tout en se maintenant en position fixe par rapport au carter (10, 10′) et en ce qu'il se produit par l'intermédiaire d'un dispositif de contact externe un nettoyage du diaphragme (30) de l'électrode de référence lorsque celui-ci entre en contact avec le milieu sur lequel on veut effectuer la mesure, en raison de l'augmentation de la pression au sein de la solution d'électrolyte qu'entraîne cette manoeuvre, pendant le passage temporaire de la sonde.

2. Sonde de pH-mètre dotée d'une électrode de référence permettant l'établissement d'un potentiel de travail constant, que l'on emploie dans l'industrie de transformation de ia viande ou pour effectuer des mesures à l'intérieur de matières semi-solides telles que les fromages, les pâtes et autres matières semi-solides de ce type, sonde de pH-mètre dans laquelle l'électrode de pH-mètre que l'on utilise pour effectuer la mesure est introduite rapidement à l'intérieur du milieu dans lequel on doit effectuer la mesure, et sonde de pH-mètre dans laquelle on peut comprimer le réservoir d'électrolyte (22, 23; 22′, 23′) qui contient les électrolytes internes (26, 26′) du système de référence (12, 12′) en constituant un système piston/cylindre (22, 23; 22′, 23′) et en introduisant ce système piston/cylindre au moyen d'un carter (10, 10′) qui sert en même temps de poignée permettant d'effectuer le rapide mouvement de perforation qui permet de planter l'électrode de référence, mouvement dans lequel le piston (22, 22′) reste en position fixe par rapport au carter, mouvement dans lequel le cylindre (23, 23′) du système de référence repousse le piston et mouvement dans lequel le réservoir d'électrolyte (23) est introduit dans un mouvement de translation à l'intérieur d'une ouverture (24) ménagée dans le carter (10) de telle sorte que le cylindre constitue pour l'essentiel le réservoir d'électrolyte (25) et présente vers l'avant le diaphragme (30) lorsqu'on introduit le cylindre à l'intérieur du milieu sur lequel on veut effectuer la mesure tout en comprimant simultanément l'électrolyte interne qu'il contient.

3. Sonde de pH-mètre selon la revendication 2 caractérisée en ce que le piston (22, 22') est porté par une tige de piston (21) ou est directement fixé dans le carter (10, 10′) qui constitue la poignée de la sonde de pH-mètre et en ce que l'électrode de pH-mètre (11, 11′) est entourée par un tube de sûreté (11a) électriquement conducteur, lequel présente à son extrémité avant la cellule d'une électrode de verre pour la mesure du pH (11b, 11b′), laquelle est protégée en même temps que la membrane de verre par une cage de protection (14, 15).

4. Sonde de pH-mètre selon l'une des revendications 2 et 3 caractérisée en ce que la sonde de pH-mètre (11, 11′) d'une part et l'électrode de référence (12, 12′) d'autre part sont logées à l'intérieur d'un carter en forme de poignée.

5. Sonde de pH-mètre selon l'une des revendications 2 à 4 caractérisée en ce que les dispositifs de protection de l'électrode de pH-mètre (11), laquelle complète la sonde de pH-mètre sont constitués d'au moins une lancette (14) à double tranchant entourant la cellule de l'électrode de verre.

6. Sonde de pH-mètre selon l'une des revendications 2 à 5 caractérisée en ce que le tube de sûreté électriquement conducteur (11a, 11a′) de l'électrode de pH-mètre (11, 11′) est relié au potentiel de l'électrode de référence par un condensateur de liaison monté en série avec une résistance.

7. Sonde de pH-mètre selon l'une au moins des revendications 2 à 6 caractérisée en ce qu'elle est dotée d'un tube coulissant (33) qui, de son côté, contient le système piston/cylindre (22′, 23′) avec le réservoir d'électrolyte (25), lequel tube coulissant est monté à l'intérieur du carter (10′) de façon à pouvoir, ce qui concerne l'électrode de pH-mètre (11′) contiguë, être réglé en profondeur suivant les différentes positions de réglage de profondeur de piqûre.

8. Sonde de pH-mètre selon la revendication 7 caractérisée en ce que le tube coulissant (33) se déplace dans le sens de la longueur à l'intérieur d'une cavité d'insertion (34) creusée dans le carter (10′), jusqu'à ce qu'il soit bloqué par un système de retenue, et contient quant à lui le cylindre (23′) qui coulisse en son sein et qui constitue le réservoir d'électrolyte (25) du système de référence, dans lequel le piston (22′) qui est maintenu sur un support de piston en position fixe par rapport au tube coulissant coulisse à l'intérieur du cylindre (23′).

9. Sonde de pH-mètre selon la revendication 8 caractérisée en ce que le tube coulissant (33) présente sur son périmètre extérieur des encoches ou des rainures pour anneaux de retenue (42), dans lesquels s'engage une goupille de retenue (43) qui bloque en fonction du réglage de profondeur souhaité, le déplacement du tube coulissant dans les deux directions de son axe.

10. Sonde de pH-mètre selon la revendication 9 caractérisée en ce que la goupille de retenue (43) est logée à l'intérieur d'un sous-carter propre (44) qui est rajouté au carter (10′) en forme de poignée de pistolet, lequel constitue au moyen d'une extension orientée vers l'intérieur la cavité d'insertion (34) du tube coulissant (33) et en ce que la goupille de retenue (43) peut se déplacer verticalement dans le sens opposé au réglage du tube coulissant (33) dans le sens opposé à la pression exercée par un ressort de précontrainte(46).

11. Sonde de pH-mètre selon la revendication 10 caractérisée en ce que la goupille de retenue (43) avec sa partie épaisse en position extrême à l'état de repos, vient s'enclencher dans l'une des encoches pour anneaux de retenue (42) du tube coulissant (33) et s'extrait de l'encoche pour anneau de retenue (42) précédemment occupée à l'occasion de l'enfoncement manuel et libère le tube coulissant (33) pour permettre le réglage en profondeur du système de référence dans la direction de son axe.

12. Sonde de pH-mètre selon l'une des revendications 2 à 11 caractérisée en ce que le dispositif d'électrode en forme de fil (27, 27′) traverse le piston (22, 22′) et s'étend le long de la tige de piston (21) qui fixe le piston, jusqu'au support de piston situé à l'arrière du piston, lequel support de piston est inséré dans une boîte de contact (20a) en guise de fiche femelle, laquelle est fixée à l'intérieur du carter (10) en forme de longue poignée.

13. Sonde de pH-mètre selon l'une des revendications 8 à 11 caractérisée en ce que la dérivation argentchlorure d'argent (27′) qui assure l'échange au sein des électrolytes traverse un canal qui passe à l'intérieur du piston longitudinal de forme cylindrique à l'intérieur duquel il est enchâssé de façon étanche, jusqu'au support de piston (20′) qui se présente sous la forme d'une prise mâle à chacune de ses deux extrémités, support de piston auquel il est fixé de façon à assurer le passage du courant électrique et en ce que le support de piston supporte le piston (22′) au moyen d'une extension orientée vers l'avant et en ce qu'il pénètre à l'intérieur d'un carter d'insertion (31) au moyen d'une extension orientée vers l'arrière, lequel carter est situé à l'intérieur du tube coulissant (33).

14. Sonde de pH-mètre selon la revendication 13 caractérisée en ce que le carter d'insertion (31) débouche à l'intérieur d'une cavité (36) située en arrière a l'intérieur du tube coulissant (33), dans lequel se trouve un ressort de précontrainte qui assure en même temps le contact électrique avec le carter d'insertion (31) et qui s'applique en son extrémité opposée sur le carter d'insertion (31), au niveau d'une plaque de contact (37) placée à l'intérieur du logement d'insertion (34) du carter ou, le cas échéant, du sous-carter, de telle sorte que le contact électrique s'établisse par l'intermédiaire du ressort de précontrainte.

15. Sonde de pH-mètre selon l'une des revendications 4 à 14 caractérisée en ce que l'électrode de pH-mètre (11′) est entourée d'au moins deux, de préférence, de trois ou de plus de trois embouts de sécurité enfichables (51) qui sont enfichés dans une douille de raccord (47) amovible vis à vis du tube de sûreté (11a′) et, de préférence, vissée sur ce dernier, et qui dépassent la pointe avant de la cellule de l'électrode de verre (11b′), ce qui permet de la protéger en l'entourant.

16. Sonde de pH-mètre selon la revendication 15 caractérisée en ce que la douille de raccord (47) pour la réception des embouts de sécurité enfichables et l'axe de l'électrode (11a′) sont reliés entre eux par la fiche de connexion mâle de l'électrode, qui s'adapte de façon ajustable/amovible et auto-verrouillable dans le carter résistant de l'électrode (49) de telle sorte que l'on puisse extraire du carter (10′) pour procéder à un échange, à un nettoyage ou à une opération de maintenance, aussi bien l'électrode de pH-mètre (11′) que l'électrode de référence (12′).

17. Sonde de pH-mètre selon l'une des revendications 3 à 16 caractérisée en ce que, à l'intérieur du tube de sécurité métallique (11a′) de l'électrode de pH-mètre (11′), se trouve un capteur thermique (50) dont les fils de connexion s'étendent également par l'intermédiaire de la prise de la fiche de contact mâle de l'électrode avec le carter de l'électrode (48, 49) en direction des circuits de traitement qui se trouvent à l'intérieur du carter.

18. Sonde de pH-mètre selon l'une ou plusieurs des revendications 2 à 17 caractérisée en ce que le diaphragme (30) est supporté par un prolongement en longueur et en forme du tube appartenant au cylindre (23, 23′) qui constitue le réservoir d'électrolyte (25, 25′) et qui est constitué par une cellule en céramique ou par un autre matériau poreux.

19. Sonde de pH-mètre selon la revendication 18 caractérisée en ce que l'extrémité longitudinale et en forme du tube (29, 29′) qui supporte le diaphragme (30, 30′) constitue une partie du cylindre (23, 23′) constituée d'une seule pièce conique de telle sorte qu'il soit possible d'effectuer un nettoyage et un dégagement complémentaires du diaphragme (30, 30′) au moyen d'un curetage de l'extrémité longitudinale sur toute la longueur du tube (29, 29′) ou en raccourcissant la longueur du tube.

20. Sonde de pH-mètre selon l'une des revendications 2 à 19 caractérisée en ce que l'étanchéité du piston (22′) au niveau de la paroi interne du cylindre le long duquel coulisse le piston, est constituée par une double encoche en forme d'anneau (40a, 40b) à l'intérieur du piston, lesquelles encoches comprennent deux segments mobiles en forme d'anneau (41) qui font saillie à la périphérie du piston en assurant l'étanchéité.

21. Sonde de pH-mètre selon l'une des revendications 2 à 20 caractérisée en ce que la cellule de l'électrode de verre du pH-mètre (11b′) est bombée vers l'extérieur afin d'éviter la formation d'un liseré de déposition d'impuretés et à condition de constituer un support de membrane arrière.
